# FASCICULE DE BREVET EUROPEEN

(11) **EP 1 490 816 B1**
(45) Date de publication et mention de la délivrance du brevet: **18.11.2009**
(21) Numéro de dépôt: 03740553.7
(22) Date de dépôt: 02.04.2003
(51) Int. Cl.: G06Q 30/00

(54) **DISPOSITIF DE COMMUNICATION INTERACTIVE**
EINRICHTUNG ZUR INTERAKTIVEN KOMMUNIKATION
INTERACTIVE COMMUNICATION DEVICE

(30) Priorité: 03.04.2002 FR 0204367
(43) Date de publication de la demande: 29.12.2004
(73) Titulaire: Besson, Bernard, 74370 Villaz (FR); Gros, Bruno, 69130 Ecully (FR); Labruhe, Edouard, 1702 Groot Bijgaarden (BE)
(72) Inventeur: Besson, Bernard, 74370 Villaz (FR); Gros, Bruno, 69130 Ecully (FR); Labruhe, Edouard, 1702 Groot Bijgaarden (BE)
(74) Mandataire: Poncet, Jean-François
(86) Numéro de dépôt international: PCT/FR2003/001031
(87) Numéro de publication internationale: WO 2003/083599

(56) Documents cités:
- EP-A- 0 711 076
- WO-A-02/25624
- US-A- 6 073 727
- US-A1- 2001 016 819

## Description

### DOMAINE TECHNIQUE DE L'INVENTION

La présente invention concerne les dispositifs permettant l'établissement de communications entre un client et un fournisseur de prestations, à la fois pour communiquer des informations au client et pour transmettre des ordres au fournisseur de prestations.

Généralement, le client reçoit du fournisseur de prestations des informations publicitaires sous forme d'impression sur papier, sous forme de panneau publicitaire, ou même sous forme de publicité diffusée sur un écran de visualisation. Le client doit alors choisir dans la publicité reçue le sujet qui l'intéresse, et entrer en communication avec le fournisseur de prestations pour demander des compléments d'information, passer un ordre d'achat, ou toute autre activité. Dans l'établissement de sa communication, le client doit donner un nombre important d'informations, notamment une description du sujet qui l'intéresse, l'expression de son intention et de ses instructions, ainsi que l'indication de son moyen de paiement lorsqu'il s'agit d'un ordre d'achat, outre son état civil et l'indication du lieu de livraison, ses coordonnées bancaires et la preuve de sa capacité de paiement.

Lorsque la communication établie par le client vers le prestataire de services se fait par le réseau mondial de communication entre ordinateurs, il faut en outre sécuriser les données de paiement, pour éviter qu'elles soient réutilisées par des tiers mal intentionnés.

Tout cela complique les opérations à effectuer par le client, ce qui constitue un frein aux transactions économiques, et ce qui augmente le risque d'erreurs.

Plus récemment, on a imaginé un système de transmission d'ordre d'achat simplifié, dans lequel le prestataire de services détient déjà en mémoire la plupart des informations relatives au client, et il envoie au client des messages audiovisuels comportant un bouton de commande que le client peut cliquer pour envoyer un signal au fournisseur de prestations qui génère lui-même l'ordre de commande. On limite ainsi les informations qui transitent sur le réseau, et on facilite les opérations à exécuter par le client. Mais le système n'est adapté qu'à l'acte de passation de commande, et les messages que doit transmettre le fournisseur de services comprennent un bouton d'ordre de commande et sont ainsi spécifiques et plus complexes.

Le document WO 02/25 624 A1 divulgue un dispositif de publicité interactive comprenant les caractéristiques du préambule de la revendication 1.

### EXPOSE DE L'INVENTION

La présente invention a pour objet de proposer un nouveau dispositif de communication interactive qui, à la fois, facilite les opérations devant être exécutées par le client, facilite la diffusion de messages audiovisuels depuis le ou les fournisseurs de services vers les clients, limite les volumes de transmission d'informations sur les réseaux pour les diverses transactions, et est compatible avec des transactions plus complexes qu'un simple ordre d'achat.

En particulier, l'invention doit permettre au client de choisir et déclencher des transactions par le seul actionnement d'un badge, sans avoir à fournir et à transmettre d'informations confidentielles et sans utiliser de carte bancaire à codes secrets.

Simultanément, l'invention doit assurer une sécurité de la transaction, pour éviter qu'un tiers puisse interférer dans certaines transactions.

Ces buts ainsi que d'autres sont atteints par un dispositif de communication interactive selon la revendication 1.

Selon un mode de réalisation avantageux, les moyens de visualisation sont des écrans et transducteurs électroacoustiques de présentation de messages audiovisuels, placés en des positions les rendant perceptibles par les clients.

Pour permettre au client de choisir un ordre spécifique parmi une pluralité d'ordres possibles, le badge portable de client peut avantageusement comprendre une interface d'entrée permettant au client d'entrer, par une action spécifique appropriée, un ordre choisi parmi la pluralité d'ordres possibles.

Par exemple, le badge portable de client peut comprendre plusieurs touches correspondant chacune à un ordre spécifique et qui, par pression, génèrent un signal d'instruction codé contenant l'ordre spécifique correspondant.

On peut trouver avantage à prévoir que l'une des touches peut être manoeuvrée plusieurs fois de suite pour générer successivement un ordre de commande, puis un ordre de payer. La même touche peut aussi assurer la mise en marche du badge portable de client. Une temporisation peut assurer l'arrêt automatique.

Un meilleure sécurité peut être assurée en prévoyant que le badge portable de client comprend au moins une touche associée à un dispositif de reconnaissance d'empreinte digitale, et le dispositif comprend des moyens pour inhiber l'exécution de l'ordre spécifique du client en cas de non reconnaissance d'une ou plusieurs empreintes digitales préenregistrées par le client.

Dans un premier mode d'exécution :
- le badge portable de client est une carte à piste magnétique, à piste optique ou à puce, dans laquelle est mémorisé le code d'identification de client,
- le premier moyen d'accès est un lecteur de carte adapté pour lire le code d'identification de client sur la carte qui lui est présentée.

Dans un autre mode d'exécution :
- le badge portable de client comprend un émetteur de signal électromagnétique, adapté pour émettre le signal d'instruction codé sous forme d'un signal électromagnétique codé en réponse à une action spécifique du client,
- le premier moyen d'accès est un récepteur de signal électromagnétique, adapté pour recevoir ledit signal électromagnétique codé et pour en extraire le code d'identification de client et l'ordre correspondant à l'action spécifique du client.

Dans ce dernier cas, le badge portable de client peut être un dispositif spécifique. En alternative, il peut être un téléphone cellulaire.

Pour une meilleure communication entre le client et le premier moyen d'accès, il peut être avantageux de prévoir que :
- le badge portable de client est adapté pour recevoir des signaux électromagnétiques d'accusé de réception,
- le premier moyen d'accès comprend un émetteur et des moyens pour générer et émettre un signal électromagnétique d'accusé de réception après réception d'un signal d'instruction codé provenant du badge portable de client,
- le badge portable de client est adapté pour émettre un signal d'état, perceptible par l'utilisateur, et indiquant si le signal d'instruction codé a été correctement reçu par le premier moyen d'accès.

Dans tous les cas précédents, lorsque l'on veut faire un lien entre le message audiovisuel perçu par le client sur un moyen de visualisation et l'ordre que le client veut donner, on peut prévoir que :
- un sous-programme, contenu dans ledit programme, pilote le système serveur pour mémoriser l'instant de transmission de chaque message audiovisuel à diffuser à chaque moyen de visualisation,
- à réception d'un message d'instruction, le programme du système serveur associe le signal d'instruction codé spécifique, l'identifiant du moyen de visualisation, l'instant de génération du signal d'instruction codé, et la suite des messages à diffuser, pour déterminer le message audiovisuel à diffuser qui était visualisé à l'instant de génération du signal d'instruction codé et pour en déduire l'action à entreprendre par le moyen de transmission de retour.

Dans le but d'assurer une meilleure sécurité des transactions, notamment des transactions ayant une incidence économique non négligeable, on peut prévoir que :
- le dispositif comprend un moyen de transmission de retour, adapté pour établir directement avec le client une communication de suivi avec le système serveur ou avec un système prestataire désigné par le système serveur,
- le programme du système serveur est adapté pour choisir et établir la communication de suivi en fonction du signal d'instruction codé reçu du client et en fonction des informations contenues dans la zone d'informations relatives à une pluralité de clients.

Le moyen de transmission de retour peut avantageusement être le réseau téléphonique des téléphones cellulaires. La communication s'établit alors par téléphone, soit pour la demande de renseignements complémentaires, soit pour la confirmation d'une commande, soit pour un ordre de livraison, soit pour tout autre mode de transaction.

Selon un mode de réalisation particulier, le moyen de transmission de retour est un moyen de transmission de messages écrits, tels que le courrier postal, le courrier électronique, la télécopie, les messages électroniques. Cela constitue une alternative au téléphone cellulaire.

### DESCRIPTION SOMMAIRE DES DESSINS

D'autres objets, caractéristiques et avantages de la présente invention ressortiront de la description suivante faite en relation avec les figures annexées, dans lesquelles :
- la figure 1 illustre schématiquement l'architecture d'un dispositif de communication interactive selon un mode de réalisation de la présente invention ; et
- la figure 2 illustre la face active d'un badge portable de client selon un mode de réalisation de l'invention.

### DESCRIPTION DES MODES DE REALISATION PREFERES

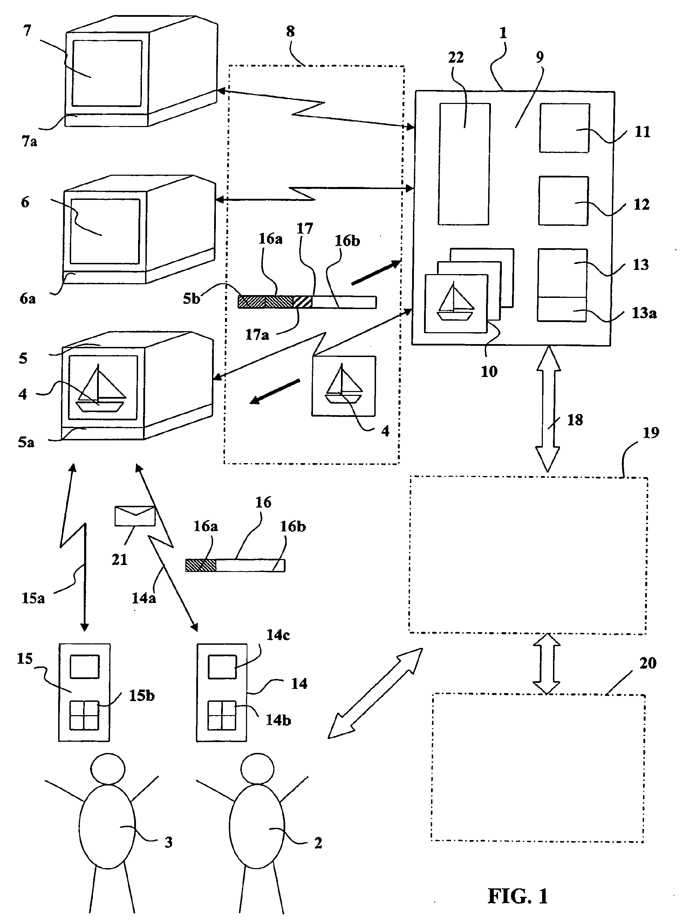

Dans le mode de réalisation illustré sur la figure 1, un dispositif de communication interactive selon l'invention permet les communications entre un système serveur 1 et plusieurs clients schématiquement illustrés 2 et 3.

Le système serveur peut communiquer des messages audiovisuels 4 aux clients 2 et 3 par l'intermédiaire d'une pluralité de moyens de visualisation de messages à diffuser tels que les moyens 5, 6 et 7, placés à distance du système serveur 1. Un réseau de communication est agencé pour transmettre, depuis le système serveur 1 jusqu'aux moyens de visualisation 5-7, les messages audiovisuels 4 à diffuser choisis par un programme qui est enregistré dans un moyen de mémorisation 9 du système serveur 1.

En pratique, le moyen de mémorisation 9 contient une zone 10 des divers messages à diffuser, contient une zone 11 des informations relatives à une pluralité de clients, contient une zone 12 des informations relatives aux moyens de visualisation de messages à diffuser, et contient un programme 13 de communication interactive qui pilote une unité centrale 22.

Chaque moyen de visualisation 5-7 est associé à un identifiant de moyen de visualisation, qui permet de l'identifier de façon univoque.

Le dispositif comprend en outre au moins un premier moyen d'accès, respectivement 5a, 6a ou 7a, placé à proximité d'un moyen de visualisation 5, 6 ou 7 auquel il est associé. Le premier moyen d'accès 5a-7a est adapté pour recevoir d'un client 2 ou 3 un signal d'instruction qu'il transmet ensuite au système serveur 1 par le réseau de communication 8.

Chaque client 2 ou 3 peut être muni d'un badge portable de client, respectivement 14 ou 15, qui lui est propre.

Chaque badge portable de client 14 ou 15 est agencé pour entrer dans le premier moyen d'accès 5a-7a, en réponse à une action spécifique du client 2 ou 3, un signal d'instruction codé 16 choisi par le client 2 ou 3 et contenant un code d'identification de client 16a et un ordre 16b spécifique pris parmi une pluralité d'ordres possibles.

Le premier moyen d'accès 5a-7a transmet au système serveur 1 ledit signal d'instruction codé 16, sous forme d'un message d'instruction 17 qui contient à la fois l'ordre 16b du client, le code d'identification de client 16a, mais également dans une zone 5b l'identification du moyen de visualisation 5-7 correspondant.

Après réception d'un message d'instruction 17, le système serveur 1 exécute l'ordre du client, ou établit préalablement avec le client 2 ou 3 une communication de suivi 18, par l'intermédiaire d'un moyen de transmission de retour 19. Le moyen de transmission de retour 19 est adapté pour établir directement avec le client 2 ou 3 une communication de suivi avec le système serveur 1 ou avec un système prestataire 20 désigné par le système serveur 1.

Le programme 13 du système serveur 1 est adapté pour choisir et établir la communication de suivi 18 en fonction du signal d'instruction codé 16 reçu du client 2 ou 3 par le message d'instructions 17 : le programme 13 trouve dans le signal d'instructions codé 16 le code d'identification de client 16a et peut alors extraire de la zone 11 des informations relatives à la pluralité de clients les coordonnées téléphoniques du client intéressé pour piloter le moyen de transmission de retour 19 et établir ainsi la communication de suivi 18 ; le programme 13 trouve aussi dans le signal d'instruction codé 16 l'ordre 16b du client, et peut alors extraire de la zone 11 des informations relatives à la pluralité de clients les données complémentaires nécessaires au suivi de l'ordre du client, par exemple des données de crédit, des autorisations d'actions, pour donner suite à l'ordre du client.

De préférence, le dispositif selon l'invention est programmé de façon à gérer différemment les transactions peu importantes et les transactions plus importantes. Ainsi, le programme 13 du système serveur peut-être adapté pour lancer directement l'exécution de l'ordre spécifique 16b du client, sans établir une communication de suivi 18, lorsque l'ordre 16b implique une transaction financière dont le montant est inférieur à un seuil prédéfini. Par contre, lorsque l'ordre spécifique 16b du client implique une transaction financière dont le montant est supérieur au seuil prédéfini, alors le programme 13 du système serveur établit la communication de suivi 18, afin de vérifier la volonté réelle du client.

Dans le cas d'une communication de suivi 18, il est avantageux de prévoir que le système serveur 1 comprenne un dispositif de reconnaissance vocale associé au moyen de transmission de retour 19, et des moyens pour inhiber l'exécution de l'ordre spécifique 16b en cas de non reconnaissance de la voix préenregistrée du client 2 ou 3.

Avantageusement, le message d'instruction 17 peut en outre contenir dans une zone 17a l'indication de l'instant auquel a été émis le signal d'instruction codé 16. Cela permet ensuite de faire le lien avec le message audiovisuel 4 qui a été perçu par le client 2 ou 3 au moment où il a généré le signal d'instruction codé 16. Pour cela, le programme 13 mémorisé dans les moyens de mémorisation 9 du système serveur 1 comprend un sous-programme 13a qui pilote le système serveur 1 pour mémoriser l'instant de transmission de chaque message audiovisuel 4 à diffuser à chaque moyen de visualisation 5-7.

Les moyens de visualisation 5-7 peuvent par exemple être des écrans et des transducteurs électro-acoustiques, pour présentation de messages audiovisuels, placés en des positions les rendant perceptibles par les clients 2 et 3. Comme écran et transducteurs électroacoustiques, on peut utiliser par exemple un poste de télévision traditionnel, un ordinateur multimédia, un panneau d'affichage, un présentoir de produits, ou tout autre dispositif équivalent.

On peut par exemple placer les moyens de visualisation 5-7 dans des lieux publics, ou domiciles des clients, et ils peuvent être reliés au système serveur 1 notamment par le réseau mondial de communication entre ordinateurs, par satellite, par le réseau téléphonique commuté, par des lignes dédiées, par le réseau câblé à fibres optiques, par voie hertzienne, ou par tout autre moyen.

On peut aussi prévoir que le badge portable de client 14 ou 15 est lui-même un moyen de visualisation.

Dans un premier mode de réalisation, le badge portable de client 14 ou 15 peut être une carte à piste magnétique, à piste optique ou à puce, dans laquelle est mémorisé le code d'identification de client 16a, et qui comprend par exemple au moins une touche pour que le client choisisse l'ordre spécifique 16b à émettre. Le premier moyen d'accès 5a-7a peut alors comprendre un lecteur de carte, adapté pour lire le code d'identification de client 16a sur la carte 14 ou 15 qui lui est présentée. Pour transmettre une instruction au système serveur 1, le client 2 ou 3 doit alors présenter sa carte 14 ou 15 dans le lecteur du premier moyen d'accès 5a-7a, et choisir l'ordre spécifique 16b.

Selon un mode de réalisation préféré, le badge portable de client 14 ou 15 peut comprendre un émetteur de signal électromagnétique, adapté pour émettre le signal d'instruction codé 16 sous forme d'un signal électromagnétique codé 14a ou 15a en réponse à l'actionnement d'une touche 14b ou 15b par le client 2 ou 3. Le premier moyen d'accès 5a-7a comprend alors un récepteur de signal électromagnétique, adapté pour recevoir ledit signal électromagnétique codé 14a ou 15a et pour en extraire le code d'identification de client 16a et l'ordre 16b correspondant à la touche 14b ou 15b actionnée par le client 2 ou 3.

Selon les applications envisagées, d'autres moyens d'accès 5a-7a peuvent comprendre une caisse enregistreuse, un distributeur de billets de banque ou de pièces, un automate, un téléphone.

De préférence, le badge portable de client 14 ou 15 comprend plusieurs touches, par exemple quatre touches comme illustré sur la figure, correspondant chacune à un ordre spécifique et générant un signal d'instruction codé 16 contenant un ordre spécifique.

Par exemple, si le client 2 appuie sur une touche 14b qui provoque l'envoi d'un signal d'instruction codé 16 de type ordre d'achat puis du message d'instruction 17, le système va associer le message d'instructions 17 au message audiovisuel 4 perçu par le client 2 ou 3 au moment où il appuie sur la touche 14b. Ainsi, le système serveur 1 interprétera par exemple le message d'instruction 17 comme étant un ordre d'achat relatif à un objet apparaissant sur l'écran 5 dont le premier moyen d'accès 5a a reçu le signal d'instruction codé 16 envoyé par le client 2. A réception de cet ordre, le système serveur 1 établit éventuellement une communication de suivi 18 avec le client 2, par l'intermédiaire du moyen de transmission de retour 19.

Le moyen de transmission de retour peut par exemple être un moyen de transmission de messages écrits, tels que le courrier postal, le courrier électronique, la télécopie, les messages électroniques sur téléphone cellulaire. Ce mode de transmission est adapté lorsque les messages à transmettre sont relativement simples et n'ont pas à être transmis de façon particulièrement rapide.

On pourra toutefois préférer un moyen de transmission de retour sous forme du réseau téléphonique des téléphones cellulaires. On assure ainsi de façon plus certaine une communication directe avec le client 2 ou 3. Et dans ce cas, il est avantageux d'utiliser, comme badge portable de client 14 ou 15, le même téléphone cellulaire programmé de façon appropriée.

Dans tous les cas où le badge portable de client 14 ou 15 est adapté pour émettre des signaux électromagnétiques, par exemple dans le cas d'un téléphone cellulaire ou d'un émetteur approprié, on peut trouver avantage à prévoir des moyens pour afficher l'état de la transmission. Dans ce cas, le badge portable de client 14 ou 15 peut avantageusement être adapté pour recevoir des signaux électromagnétiques d'accusé réception qui sont émis par le premier moyen d'accès 5a-7a. Le premier moyen d'accès 5a-7a comprend pour cela un émetteur et des moyens pour générer et émettre un signal électromagnétique d'accusé de réception 21 après réception d'un signal d'instruction codé 16 provenant du badge portable de client 14 ou 15. Simultanément, le badge portable de client 14 ou 15 est adapté pour émettre un signal d'état 14c, perceptible par l'utilisateur, et indiquant si le signal d'instruction codé 16 a été correctement reçu par le premier moyen d'accès 5a-7a.

Par exemple, le badge portable de client 14 ou 15 peut être programmé pour émettre un signal d'état 14c "bien reçu" s'il a reçu le signal électromagnétique d'accusé de réception 21 peu après l'émission du signal d'instruction codé 16, et pour émettre un signal d'état 14c "mal reçu" s'il n'a pas reçu le signal électromagnétique d'accusé de réception 21 à l'issue d'un délai prédéterminé après l'émission d'un signal d'instruction codé 16.

L'intérêt de l'invention, dans tous ses modes de réalisation, est de permettre au client 2 ou 3, par le seul actionnement de son badge portable de client 14 ou 15, de donner au système serveur 1 des instructions spécifiques suffisantes pour réaliser une transaction complexe tel qu'un ordre d'achat et de paiement, une demande de renseignement complémentaire, une demande de livraison, ou divers autres services pouvant être rendus par des prestataires de services associés.

On peut avantageusement prévoir en outre que le badge portable de client 14 ou 15 comprend une touche BIS et des moyens de mémorisation pour mémoriser temporairement le signal d'instruction codé 16 jusqu'à réception d'un signal électromagnétique d'accusé de réception 21 : dans le cas où le signal électromagnétique d'accusé de réception 21 n'est pas reçu, et dès émission d'un signal d'état 14c "mal reçu", la touche BIS est activée, et l'utilisateur peut la manipuler pour émettre à nouveau le signal d'instruction codé 16 mémorisé. Cette possibilité permet notamment de résoudre les problèmes de collision, en cas d'émission simultanée de plusieurs signaux d'instruction codés provenant de plusieurs badges portables de clients 14 et 15 vers le même premier moyen d'accès 5a.

Chaque moyen de visualisation 5-7 de messages à diffuser peut comprendre une caméra de surveillance privée, fixée au-dessus de l'écran, un petit moniteur ou écran de contrôle récepteur d'images provenant de la caméra, un capteur de fréquentation, et plusieurs premiers moyens d'accès tels que le moyen d'accès 5a.

Le signal électromagnétique d'accusé de réception 21 peut comprendre un code d'identité du premier moyen d'accès 5a-7a qui l'a émis. Ce code peut s'afficher sur le badge portable de client 14 ou 15.

Le système serveur 1 peut être programmé pour établir rapidement la communication de suivi 18. En alternative, le système serveur 1 peut être programmé pour différer l'établissement de la communication de suivi 18, garantissant ainsi une discrétion ou confidentialité des communications.

On peut prévoir d'associer à un badge portable de client 14 ou 15 principal plusieurs sous badges interactifs, diffusés par exemple aux membres d'une même famille.

En alternative ou en complément, on peut prévoir que plusieurs clients peuvent utiliser successivement un même badge protable de client. Dans ce cas on prévoit de préférence un moyen de reconnaissance de caractère biométrique tel qu'une empreinte digitale, pour inhiber le fonctionnement du badge à défaut de reconnaissance de l'une des empreintes préenregistrées, et le signal d'instruction codé 16 peut contenir à la fois l'ordre choisi 16b, le code d'identification de client 16a, et un code d'identification du badge portable de client 14 ou 15.

Dans le cas d'un badge portable de client 14 ou 15 sous forme d'un téléphone cellulaire, on peut avantageusement programmer le téléphone cellulaire de façon à le munir d'un code d'accès chiffré, d'une reconnaissance vocale par le timbre de voix du client habituel, un pseudonyme personnalisé, une reconnaissance d'empreinte digitale.

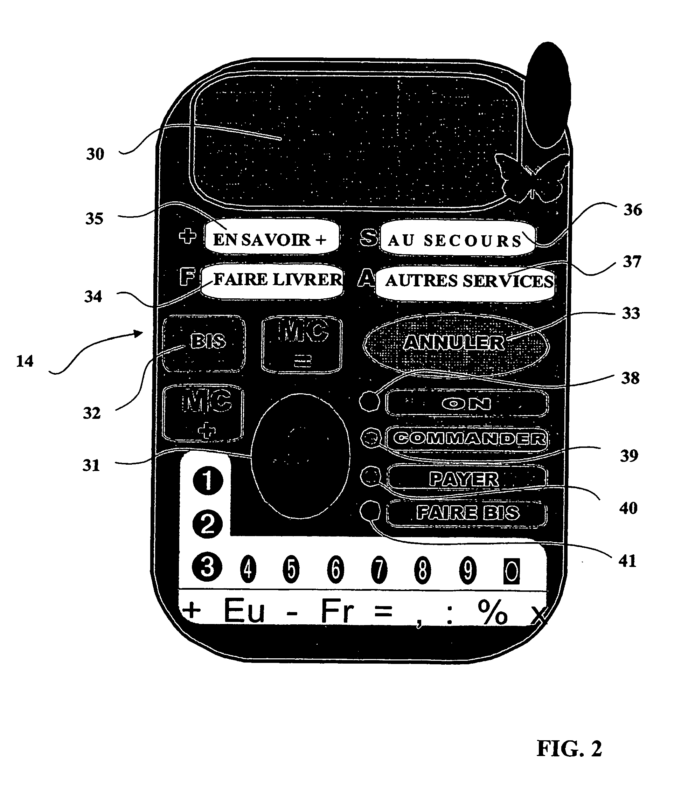

La figure 2 illustre un exemple de badge portable de client.

Le badge portable de client 14 se présente sous forme d'un boîtier de type calculette, sur lequel on distingue un écran d'affichage 30, éventuellement remplacé par des diodes électroluminescentes, et notamment une touche principale 31, une touche BIS 32, une touche ANNULER 33, une touche FAIRE LIVRER 34, une touche EN SAVOIR PLUS 35, une touche AU SECOURS 36, une touche AUTRES SERVICES 37.

La touche principale 31 constitue d'une part un moyen d'actionnement de l'interface, et d'autre part un moyen de reconnaissance de l'empreinte digitale de l'opérateur. L'empreinte digitale du client est préalablement enregistrée, soit dans le badge portable de client, soit dans le système serveur 1 à condition de prévoir la transmission des informations correspondantes avec l'ordre du client.

Une première pression sur la touche principale 31 met sous tension le badge portable de client, et provoque éventuellement l'illumination d'une première diode électroluminescente 38. Une seconde pression sur la touche principale 31 envoie un ordre de commande et provoque l'illumination d'une seconde diode électroluminescente 39. Une troisième pression sur la touche principale 31 provoque l'envoi d'un ordre de payer, et l'illumination d'une diode électroluminescente 40.

On peut prévoir un nombre plus important d'ordres spécifiques en affectant à certains ordres spécifiques une combinaison de touches à actionner simultanément ou en succession.

Dans l'hypothèse où le badge portable de client 14 ne reçoit pas un accusé réception de l'ordre qui a été envoyé au moyen d'accès proche, le badge portable de client génère un message visuel constitué par l'illumination de la diode 41, incitant le client à appuyer sur la touche BIS 32 pour générer à nouveau l'ordre.

On notera que le dispositif de reconnaissance d'empreinte digitale peut être remplacé par tout autre moyen de reconnaissance biométrique.

Il peut être utile de modifier périodiquement le code d'identification du client 16a. Une possibilité consiste à prévoir que :
- le badge portable de client contient, enregistrée dans une mémoire de badge, une pile de codes d'identification de client 16a, rangés selon un ordre aléatoire,
- le système serveur 1 contient, enregistrée dans une mémoire de serveur, la même pile de codes d'identification de client rangés selon le même ordre aléatoire,
- à chaque ordre spécifique 16b que le client a décidé d'émettre, le badge portable de client 14 associe le code d'identification de client 16a de rang immédiatement supérieur dans la pile de codes d'identification de client,
- à chaque réception d'un message d'instruction 17, le système serveur 1 compare le code d'identification de client 16a reçu avec le code d'identification de client de rang immédiatement supérieur dans sa propre pile de codes d'identification de client, et inhibe l'exécution de l'ordre spécifique 16b du client en cas de différence.

Selon une autre possibilité, les signaux d'instruction codés 16 et/ou les messages d'instruction 17, peuvent faire l'objet d'un cryptage pouvant aller de 128 à 448 bits, avec des clés distribuées dans un mode de sélection aléatoire, modifiable et réglable quant au rythme de distribution de clés.

Le fonctionnement du dispositif selon l'invention peut être résumé de la façon ci-après dans le cas d'un ordre de commande.

Lorsqu'il voit sur le moyen de visualisation 5 un message audiovisuel 4 qui l'intéresse, le client 2 appuie sur la touche 14b relative à un ordre de commande. Le badge portable de client 14 émet alors un signal d'instruction codé 16 envoyé au premier moyen d'accès 5a. Le premier moyen d'accès 5a génère immédiatement, ou en différé, un message d'instruction 17 envoyé au système serveur 1, lequel vérifie les données du message : vérification du code d'identification de client 16a par rapport à la zone 11 des informations sur la pluralité de clients, vérification de l'identification de moyens de visualisation 5b par rapport à la zone des moyens de visualisation de messages à diffuser 12, recherche du message audiovisuel 4 dans la zone 10 des messages à diffuser en fonction de l'instant de génération du signal d'instruction codé 17a. Le système serveur 1 génère alors, immédiatement ou en différé, un appel téléphonique sur le téléphone portable 14 du client 2, pour valider la commande, programmer la livraison et le suivi en ligne, enregistrer le règlement total.

Lorsqu'il appuie sur une touche spécifique pour envoi d'un message de demande d'information, le client 2 génère par son badge portable de client 14 un signal d'instruction codé spécifique différent, qui est transmis au système serveur 1 de la même façon et qui est interprété par le système serveur 1 pour établir rapidement une communication de suivi 18 permettant de transmettre au client les informations qu'il souhaite.

Un mode de fonctionnement similaire peut être prévu dans le cas où le client 2 appuie sur une touche relative à une commande de livraison.

Lorsque le client 2 appuie sur une touche de commande d'autre service, le système serveur 1 interprète le signal reçu et établit une communication entre un système prestataire 20 de service et le client 2.

On peut envisager de donner au dispositif une fonction supplémentaire de demande de secours. Pour cela, on affecte une touche spécifique sur le badge portable de client 14, l'actionnement de cette touche générant un signal d'instruction codé spécifique 16 qui est reçu par le système serveur 1, lequel génère immédiatement un appel téléphonique sur le téléphone portable du client 2. Si la communication ne peut être établie, alors le système serveur 1 génère un message téléphonique, par fax ou par courrier électronique, transmis directement aux forces de l'ordre les plus proches du premier moyen d'accès 5a-7a qui a reçu le signal du client 2. Le message envoyé aux forces de l'ordre contient toutes les informations sur le client, sur la situation géographique du moyen d'accès 5a-7a, afin qu'une intervention soit diligentée instantanément sur les lieux appropriés et dans les plus brefs délais.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de communication interactive, comprenant :
- au moins un processeur central, ledit processeur central ayant des moyens de mémorisation (9) contenant un programme (13) de communication interactive et contenant une zone (11) d'informations relatives à une pluralité de clients et les informations nécessaires au suivi d'ordres des clients,
- un moyen de visualisation (5-7) de messages audiovisuels à diffuser, connecté au processeur central,
- un réseau de communication (8) connecté au moyen de visualisation (5-7),
- au moins un premier moyen d'accès (5a-7a), placé dans ou à proximité d'un moyen de visualisation (5-7) auquel il est associé,
- au moins un badge portable de client (14, 15) affecté à un client (2, 3), comprenant une interface d'entrée permettant au client (2, 3), par une action spécifique appropriée, d'entrer un ordre (16b) choisi parmi une pluralité d'ordres possibles, et agencé pour entrer dans le premier moyen d'accès (5a-7a), en réponse à l'action spécifique du client (2, 3), un signal d'instruction provenant du client (2, 3),
**caractérisé en ce que** :
- le processeur central est un système serveur (1), placé à distance du moyen de visualisation (5-7), et connecté au réseau de communication (8),
- les moyens de mémorisation (9) contiennent une zone (10) de messages audiovisuels à diffuser,
- le dispositif de communication interactive comprend une pluralité de moyens de visualisation (5-7) de messages audiovisuels à diffuser,
- le réseau de communication (8) est agencé pour transmettre, depuis le système serveur (1) jusqu'au moyen de visualisation (5-7), les messages audiovisuels (4) à diffuser choisis par le programme (13),
- le signal d'instruction est un signal d'instruction codé (16) contenant un code d'identification de client (16a) et l'ordre (16b) choisi par le client (2, 3) parmi la pluralité d'ordres possibles,
- le premier moyen d'accès (5a-7a) est adapté pour transmettre au système serveur (1), par le réseau de communication (8), un message d'instruction (17) qui contient à la fois l'ordre (16b) choisi par le client (2, 3), le code d'identification de client (16a), un identifiant du moyen de visualisation (5b), et l'indication de l'instant (17a) auquel a été émis le signal d'instruction codé (16),
- à réception d'un message d'instruction (17), le programme (13) du système serveur (1) associe le signal d'instruction codé spécifique (16), l'identifiant du moyen de visualisation (5b), l'instant de génération du signal d'instruction codé (17a), et la suite des messages à diffuser (10), pour déterminer le message audiovisuel (4) à diffuser qui était visualisé à l'instant de génération du signal d'instruction codé (17a) et pour en déduire l'action à entreprendre.

2. Dispositif de communication interactive selon la revendication 1, **caractérisé en ce que** les moyens de visualisation (5-7) sont des écrans et transducteurs électroacoustiques de présentation de messages audiovisuels, placés en des positions les rendant perceptibles par les clients (2, 3).

3. Dispositif de communication interactive selon l'une des revendications 1 ou 2, **caractérisé en ce que** le badge portable de client comprend plusieurs touches correspondant chacune à un ordre spécifique et qui, par pression, génèrent un signal d'instruction codé (16) contenant l'ordre spécifique (16b) correspondant.

4. Dispositif de communication interactive selon la revendication 3, **caractérisé en ce que** l'une des touches peut être manoeuvrée plusieurs fois de suite pour générer successivement un ordre de commande, puis un ordre de payer.

5. Dispositif de communication interactive selon l'une des revendications 3 ou 4, **caractérisé en ce que** le badge portable de client comprend au moins une touche associée à un dispositif de reconnaissance d'empreinte digitale, et le dispositif comprend des moyens pour inhiber l'exécution de l'ordre spécifique (16b) en cas de non reconnaissance d'une ou plusieurs empreintes digitales préenregistrées par le client (2, 3).

6. Dispositif de communication interactive selon l'une quelconque des revendications 1 à 5, **caractérisé en ce que** :
- le badge portable de client (14, 15) est une carte à piste magnétique, à piste optique ou à puce, dans laquelle est mémorisé le code d'identification de client (16a),
- le premier moyen d'accès est un lecteur de carte adapté pour lire le code d'identification de client (16a) sur la carte qui lui est présentée.

7. Dispositif de communication interactive selon l'une quelconque des revendications 1 à 5, **caractérisé en ce que** :
- le badge portable de client comprend un émetteur de signal électromagnétique, adapté pour émettre le signal d'instruction codé (16) sous forme d'un signal électromagnétique codé (14a, 15a) en réponse à une action spécifique du client (2, 3),
- le premier moyen d'accès (5a-7a) est un récepteur de signal électromagnétique, adapté pour recevoir ledit signal électromagnétique codé (14a, 15a) et pour en extraire le code d'identification de client (16a) et l'ordre (16b) correspondant à l'action spécifique du client (2, 3).

8. Dispositif de communication interactive selon la revendication 7, **caractérisé en ce que** le badge portable de client (14, 15) est un téléphone cellulaire.

9. Dispositif de communication interactive selon l'une des revendications 7 ou 8, **caractérisé en ce que** :
- le badge portable de client (14, 15) est adapté pour recevoir des signaux électromagnétiques d'accusé de réception (21),
- le premier moyen d'accès (5a-7a) comprend un émetteur et des moyens pour générer et émettre un signal électromagnétique d'accusé de réception (21) après réception d'un signal d'instruction codé (16) provenant du badge portable de client (14, 15),
- le badge portable de client (14, 15) est adapté pour émettre un signal d'état (14c), perceptible par l'utilisateur, et indiquant si le signal d'instruction codé (16) a été correctement reçu par le premier moyen d'accès (5a-7a).

10. Dispositif de communication interactive selon l'une quelconque des revendications 1 à 9, **caractérisé en ce que** :
- il comprend un moyen de transmission de retour (19), adapté pour établir directement avec le client (2, 3) une communication de suivi (18) avec le système serveur (1) ou avec un système prestataire (20) désigné par le système serveur (1),
- le programme (13) du système serveur (1) est adapté pour choisir et établir la communication de suivi (18) en fonction du signal d'instruction codé (16) reçu du client (2, 3) et en fonction des informations contenues dans la zone (11) d'informations relatives à une pluralité de clients.

11. Dispositif de communication interactive selon la revendication 10, **caractérisé en ce que** le moyen de transmission de retour (19) est le réseau téléphonique des téléphones cellulaire,

12. Dispositif de communication interactive selon la revendication 10, **caractérisé en ce que** le moyen de transmission de retour (19) est un moyen de transmission de messages écrits, tels que le courrier postal, le courrier électronique, la télécopie, les messages électroniques.

13. Dispositif de communication interactive selon l'une quelconque des revendications 10 à 12, **caractérisé en ce que** le programme (13) du système serveur (1) lance directement l'exécution de l'ordre spécifique (16b) du client sans établir une communication de suivi (18) lorsque l'ordre (16b) implique une transaction financière dont le montant est inférieur à un seuil prédéfini.

14. Dispositif de communication interactive selon l'une quelconque des revendications 10 à 13, **caractérisé en ce que** le système serveur (1) comprend un dispositif de reconnaissance vocale associé au moyen de transmission de retour (19), et des moyens pour inhiber l'exécution de l'ordre spécifique (16b) en cas de non reconnaissance de la voix préenregistrée du client (2, 3).

15. Dispositif de communication interactive selon l'une quelconque des revendications 1 à 14, **caractérisé en ce que** :
- un sous-programme (13a), contenu dans ledit programme (13), pilote le système serveur (1) pour mémoriser l'instant de transmission de chaque message audiovisuel (4) à diffuser à chaque moyen de visualisation (5-7).

16. Dispositif de communication interactive selon l'une quelconque des revendications 1 à 15, **caractérisé en ce que** :
- le badge portable de client contient, enregistrée dans une mémoire de badge, une pile de codes d'identification de client (16a), rangés selon un ordre aléatoire,
- le système serveur (1) contient, enregistrée dans une mémoire de serveur, la même pile de codes d'identification de client, rangés selon le même ordre aléatoire,
- à chaque ordre spécifique (16b), le badge portable de client (14) associe le code d'identification de client (16a) de rang immédiatement supérieur dans la pile de codes d'identification de client,
- à chaque réception d'un message d'instruction (17), le système serveur (1) compare le code d'identification de client (16a) reçu avec le code d'identification de client de rang immédiatement supérieur dans sa propre pile de codes d'identification de client, et inhibe l'exécution de l'ordre spécifique (16b) du client en cas de différence.

17. Dispositif de communication interactive selon l'une quelconque des revendications 1 à 15, **caractérisé en ce que** les signaux d'instruction codés (16) et/ou les messages d'instruction (17) font l'objet d'un cryptage avec des clés distribuées dans un mode de sélection aléatoire.

## Claims

1. Interactive communication device comprising :
- at least one central processor, said central processor having storage means (9) containing an interactive communication program (13) and containing an area (11) for information relating to a plurality of customers and information necessary for following up customer instructions,
- a means (5-7) for displaying broadcast audiovisual messages, connected to the central processor,
- a communication network (8) connected to the display means (5-7),
- at least one first access means (5a-7a) placed in or near a display means (5-7) with which it is associated,
- at least one mobile customer badge (14, 15) assigned to a customer (2, 3), comprising an input interface enabling the customer (2, 3) to enter an instruction (16b) chosen from a plurality of possible instructions by an appropriate specific action, and adapted, in response to the specific action of the customer (2, 3), to enter into the first access means (5a-7a) an instruction signal coming from the customer (2, 3),
**characterized in that** :
- the central processor is a server system (1), placed at a distance from the display means (5-7), and connected to the communication network (8),
- the storage means (9) contain an area (10) for broadcast audiovisual messages,
- the interactive communication device comprises a plurality of means (5-7) for displaying individual broadcast messages,
- the communication network (8) is adapted to transmit broadcast audiovisual messages (4) chosen by the program (13) from the server system (1) to the display means (5-7),
- the instruction signal is a coded instruction signal (16) containing a customer identification code (16a) and an instruction (16b) chosen by the customer (2, 3) from the plurality of possible instructions,
- the first access means (5a-7a) is adapted to transmit to the server system (1) via the communication network (8) an instruction message (17) that contains the instruction (16b) chosen by the customer (2, 3), the customer identification code (16a), an identifier of the display means (5b), and the indication (17a) of the time at which the coded instruction signal (16) has been sent,
- on receiving an instruction message (17), the program (13) of the server system (1) combines the specific coded instruction signal (16), the identifier of the display means (5b), the time of generation of the coded instruction signal (17a), and the sequence of the broadcast messages (10), to determine the broadcast audiovisual message (4) that was being displayed at the time of generation of the coded instruction signal (17a) and to deduce therefrom the action to be performed.

2. Interactive communication device according to claim 1, **characterized in that** the display means (5-7) are screens and electroacoustic transducers for presenting audiovisual messages placed at positions making them perceptible by the customers (2, 3).

3. Interactive communication device according to either claim 1 or claim 2, **characterized in that** the mobile customer badge comprises a plurality of keys each corresponding to a specific instruction and which, when pressed, generate a coded instruction signal (16) containing the corresponding specific instruction (16b).

4. Interactive communication device according to claim 3, **characterized in that** one of the keys may be operated more than once in succession to generate successively an order instruction and then a payment instruction.

5. Interactive communication device according to either claim 3 or claim 4, **characterized in that** the mobile customer badge comprises at least one key associated with a fingerprint recognition device and the device comprises means for inhibiting execution of the specific instruction (16b) in the event of non-recognition of one or more fingerprints previously stored by the customer (2, 3).

6. Interactive communication device according to any one of claims 1 to 5, **characterized in that** :
- the mobile customer badge (14, 15) is a magnetic stripe card, an optical stripe card or a microchip card in which the customer identification code (16a) is stored,
- the first access means is a card reader adapted to read the customer identification code (16a) in a card that is presented to it.

7. Interactive communication device according to any one of claims 1 to 5, **characterized in that** :
- the mobile customer badge comprises an electromagnetic signal sender adapted to send the coded instruction signal (16) in the form of a coded electromagnetic signal (14a, 15a) in response to a specific action of the customer (2, 3),
- the first access means (5a-7a) is an electromagnetic signal receiver adapted to receive said coded electromagnetic signal (14a, 15a) and to extract therefrom the customer identification code (16a) and the instruction (16b) corresponding to the specific action of the customer (2, 3).

8. Interactive communication device according to claim 7, **characterized in that** the mobile customer badge (14, 15) is a cellular mobile telephone.

9. Interactive communication device according to either claim 7 or claim 8, **characterized in that** :
- the mobile customer badge (14, 15) is adapted to receive electromagnetic acknowledgement signals (21),
- the first access means (5a-7a) comprises a sender and means for generating and sending an electromagnetic acknowledgement signal (21) after reception of a coded instruction signal (16) from the mobile customer badge (14, 15),
- the mobile customer badge (14, 15) is adapted to emit a status signal (14c) perceptible by the user and indicating whether the first access means (5a-7a) has received the coded instruction signal (16) correctly.

10. Interactive communication device according to any one of claims 1 to 9, **characterized in that** :
- it comprises a return transmission means (19) adapted to set up directly a follow-up call (18) to the customer (2, 3) from the server system (1) or a service provider system (20) designated by the server system (1),
- the program (13) of the server system (1) is adapted to choose and to set up the follow-up call (18) as a function of the coded instruction signal (16) received from the customer (2, 3) and as a function of information contained in the area (11) for information relating to a plurality of customers.

11. Interactive communication device according to claim 10, **characterized in that** the return transmission means (19) is the cellular mobile telephones network.

12. Interactive communication device according to claim 10, **characterized in that** the return transmission means (19) is a means for transmitting text messages, such as the postal service, electronic mail, facsimile, electronic messages.

13. Interactive communication device according to any one of claims 10 to 12, **characterized in that** the program (13) of the server system (1) launches the execution of the customer's specific instruction (16b) directly without setting up a follow-up call (18) if the instruction (16b) involves a financial transaction whose amount is below a predefined threshold.

14. Interactive communication device according to any one of claims 10 to 13, **characterized in that** the server system (1) comprises a voice recognition device associated with the return transmission means (19) and means for inhibiting execution of the specific instruction (16b) in the event of non-recognition of the previously recorded voice of the customer (2, 3).

15. Interactive communication device according to any one of claims 1 to 14, **characterized in that** :
- a subroutine (13a) contained in said program (13) instructs the server system (1) to store the time of transmission to each display means (5-7) of each broadcast audiovisual message (4).

16. Interactive communication device according to any one of claims 1 to 15, **characterized in that** :
- the mobile customer badge contains a stack of customer identification codes (16a) stored in a badge memory in a random order,
- the server system (1) contains the same stack of customer identification codes stored in the same random order in a memory of the server,
- the mobile customer badge (14) associates with each specific instruction (16b) the next higher customer identification code (16a) in the stack of customer identification codes,
- on each reception of an instruction message (17), the server system (1) compares the customer identification code (16a) received with the next higher customer identification code in its own stack of customer identification codes and inhibits execution of the customer's specific instruction (16b) if they are different.

17. Interactive communication device according to any one of claims 1 to 15, **characterized in that** the coded instruction signals (16) and/or the instruction messages (17) are encrypted using keys distributed in a random selection mode.

## Patentansprüche

1. Einrichtung zur interaktiven Kommunikation, mit:
- mindestens einem zentralen Prozessor, wobei der genannte zentrale Prozessor Speichermittel (9) hat, die ein interaktives Programm (13) zur Kommunikation enthalten und die eine Zone (11) für Informationen enthalten, die sich auf eine Vielzahl von Benutzern beziehen und die Informationen enthalten, die notwendig sind, um Befehlen der Benutzer zu folgen,
- einem Visualisierungsmittel (5-7) für zu übertragende audiovisuelle Meldungen, das mit dem zentralen Prozessor verbunden ist,
- einem Kommunikationsnetzwerk (8), das mit dem Visualisierungsmittel (5-7) verbunden ist,
- mindestens einem ersten Zugangsmittel (5a-7a), das in den Visualisierungsmitteln (5-7), dem es zugeordnet ist, angeordnet ist oder in dessen Nähe,
- mindestens einem tragbaren Ausweis (14, 15) des Benutzers, der einem Benutzer (2, 3) zugeordnet ist, der ein Zutrittsinterface enthält, das dem Benutzer (2, 3) durch eine spezifische geeignete Aktion gestattet, einen Befehl (16b), der aus einer Vielzahl von möglichen Befehlen ausgewählt ist, einzugeben, und das zum Eingeben eines von dem Benutzer (2, 3) stammenden Befehlssignales in das erste Zugangsmittel (5a-7a) in Abhängigkeit von der spezifischen Aktion des Benutzers (2, 3) ausgebildet ist,
**dadurch gekennzeichnet, daß**:
- der zentrale Prozessor ein Systemserver (1) ist, der in einem Abstand zu dem Visualisierungsmittel (5-7) angeordnet ist und mit dem Kommunikationsnetzwerk (8) verbunden ist,
- die Speichermittel (9) eine Zone (10) für zu übertragende audiovisuelle Meldungen enthalten,
- die interaktive Kommunikationseinrichtung eine Vielzahl von Visualisierungsmitteln (5-7) für zu übertragende audiovisuelle Meldungen enthält,
- das Kommunikationsnetzwerk (8) dazu ausgebildet ist, die zu übertragenden audiovisuellen Meldungen (4), die von dem Programm (13) ausgewählt sind, von dem Systemserver (1) bis zu dem Visualisierungsmittel (5-7) zu übertragen,
- das Befehlssignal ein codiertes Befehlssignal (16) ist, das einen Identifikationscode (16a) des Benutzers und den von dem Benutzer (2, 3) aus der Vielzahl von möglichen Befehlen ausgewählten Befehl (16b) enthält,
- das erste Zugangsmittel (5a-7a) dazu ausgebildet ist, an den Systemserver (1) über das Kommunikationsnetzwerk (8) eine Instruktionsmeldung (17) zu übertragen, die gleichzeitig den vom Benutzer (2, 3) ausgewählten Befehl (16b), den Identifikationscode (16a) des Benutzers, einen Identifizierer des Visualisierungsmittels (5b) und die Anzeige des Momentes (17a), zu dem das codierte Instruktionssignal (16) ausgesandt wurde, enthält,
- auf den Empfang einer Instruktionsmeldung (17) das Programm (13) des Systemservers (1) das spezifisch codierte Instruktionssignal (16) den Identifizierer des Visualisierungsmittels (5b), den Moment der Erzeugung des codierten Instruktionssignals (17a) und die Folge von zu übertragenden Meldungen (10) verknüpft, um die zu übertragende audiovisuelle Meldung (4) zu bestimmen, die im Moment der Erzeugung des codierten Instruktionssignals (17a) visualisiert wurde und um daraus die durchzuführende Aktion abzuleiten.

2. Einrichtung zur interaktiven Kommunikation nach Anspruch 1, **dadurch gekennzeichnet, daß** die Visualisierungsmittel (5-7) Displays und elektroakustische Wandler sind, zur Darstellung von audiovisuellen Meldungen, die in Positionen plaziert sind, die sie für die Benutzer (2, 3) wahrnehmbar machen.

3. Einrichtung zur interaktiven Kommunikation nach einem der Ansprüche 1 oder 2, **dadurch gekennzeichnet, daß** der tragbare Ausweis des Benutzers mehrere Tasten enthält, von denen jede einem spezifischen Befehl entspricht und die auf ein Drücken ein codiertes Instruktionssignal (16) erzeugen, das den korrespondierenden spezifischen Befehl (16b) enthält.

4. Einrichtung zur interaktiven Kommunikation nach Anspruch 3, **dadurch gekennzeichnet, daß** eine der Tasten mehrere Male aufeinanderfolgend betätigt werden kann, um aufeinanderfolgend einen Befehl zur Bestellung und dann einen Befehl zum Bezahlen zu erzeugen.

5. Einrichtung zur interaktiven Kommunikation nach einem der Ansprüche 3 oder 4, **dadurch gekennzeichnet, daß** der tragbare Ausweis des Benutzers mindestens eine Taste enthält, die eine Einrichtung zur Erkennung eines Fingerabdruckes aufweist und daß die Einrichtung Mittel zum Verhindern der Ausführung des spezifischen Befehls (16b) enthält, im Falle einer Nichterkennung eines oder mehrerer zuvor von dem Benutzer (2, 3) registrierten Fingerabdruckes.

6. Einrichtung zur interaktiven Kommunikation nach irgendeinem der Ansprüche 1 bis 5, **dadurch gekennzeichnet, daß**:
- der tragbare Ausweis (14, 15) des Benutzers eine Karte mit Magnetstreifen, mit optischen Streifen oder mit einem Chip ist, in dem der Identifikationscode (16a) des Benutzers gespeichert ist,
- das erste Zugangsmittel ein Kartenleser ist, der zum Lesen des Identifikationscodes (16a) des Benutzers auf der ihm dargebotenen Karte ausgebildet ist.

7. Einrichtung zur interaktiven Kommunikation nach irgendeinem der Ansprüche 1 bis 5, **dadurch gekennzeichnet, daß**:
- der tragbare Ausweis des Benutzers einen Sender für ein elektromagnetisches Signal enthält, der dazu ausgebildet ist, das codierte Instruktionssignal (16) in Form eines codierten elektromagnetischen Signals (14a, 15a) als Antwort auf eine spezifische Aktion des Benutzers (2, 3) auszusenden,
- das erste Zugangsmittel (5a-7a) ein Empfänger für das elektromagnetische Signal ist, der dazu ausgebildet ist, das genannte codierte elektromagnetische Signal (14a, 15a) zu empfangen und den Identifikationscode (16a) des Benutzers zu extrahieren und den auf eine spezifische Aktion des Benutzers (2, 3) zugeordneten Befehl (16b).

8. Einrichtung zur interaktiven Kommunikation nach Anspruch 7, **dadurch gekennzeichnet, daß** der tragbare Ausweis (14, 15) des Benutzers ein Mobiltelefon ist.

9. Einrichtung zur interaktiven Kommunikation nach irgendeinem der Ansprüche 7 oder 8, **dadurch gekennzeichnet, daß**:
- der tragbare Ausweis (14, 15) des Benutzers ausgebildet ist zum Empfang von elektromagnetischen Signalen für eine Bestätigung eines Empfanges (21),
- das erste Zugangsmittel (5a, 7a) einen Sender und Mittel zum Erzeugen und Aussenden eines elektromagnetischen Signals der Bestätigung des Empfanges (21) nach dem Empfang eines codierten Instruktionssignales (16), das von dem tragbaren Ausweis (14, 15) des Benutzers stammt, enthält,
- der tragbare Ausweis (14, 15) des Benutzers ausgebildet ist, um ein Zustandssignal (14c) auszusenden, das von dem Verwender wahrnehmbar ist und anzeigt, ob das codierte Instruktionssignal (16) von dem ersten Zugangsmittel (5a-7a) korrekt empfangen wurde.

10. Einrichtung zur interaktiven Kommunikation nach irgendeinem der Ansprüche 1 bis 9, **dadurch gekennzeichnet, daß**:
- es Mittel zur Rückübertragung (19) enthält, die ausgebildet sind, um direkt mit dem Benutzer (2, 3) eine Folgeverbindung (18) mit dem Systemserver (1) oder mit einem von dem Systemserver (1) bestimmten Dienstleister (20) herzustellen,
- das Programm (13) des Systemservers (1) dazu ausgebildet ist, die Folgekommunikation (18) in Abhängigkeit von dem vom Benutzer (2, 3) empfangenen codierten Instruktionssignal (16) auszuwählen und zu errichten und in Abhängigkeit von Informationen, die in der Zone (11) für Informationen bezüglich einer Vielzahl von Benutzern enthalten ist.

11. Einrichtung zur interaktiven Kommunikation nach Anspruch 10, **dadurch gekennzeichnet, daß** das Rückübertragungsmittel (19) ein Telefonnetz von Mobiltelefonen ist.

12. Einrichtung zur interaktiven Kommunikation nach Anspruch 10, **dadurch gekennzeichnet, daß** das Rückübertragungsmittel (19) ein Mittel zur Übertragung von geschriebenen Meldungen ist, wie z.B. postalische Schreiben, ein elektronisches Schreiben, eine Telekopie, elektronische Meldungen.

13. Einrichtung zur interaktiven Kommunikation nach irgendeinem der Ansprüche 10 bis 12, **dadurch gekennzeichnet, daß** das Programm (13) des Systemservers (1) direkt die Ausführung des spezifischen Befehls (16b) des Benutzers veranlaßt, ohne eine Folgekommunikation (18) zu errichten, wenn der Befehl (16b) eine finanzielle Transaktion impliziert, deren Betrag kleiner ist als eine vorbestimmte Schwelle.

14. Einrichtung zur interaktiven Kommunikation nach irgendeinem der Ansprüche 10 bis 13, **dadurch gekennzeichnet, daß** der Systemserver (1) eine Einrichtung zur Spracherkennung enthält, die dem Mittel zur Rückübertragung (19) zugeordnet ist und Mittel zur Verhinderung der Ausführung des spezifischen Befehls (16b) im Falle einer Nichterkennung der zuvor registrierten Stimme des Benutzers (2, 3).

15. Einrichtung zur interaktiven Kommunikation nach irgendeinem der Ansprüche 1 bis 14, **dadurch gekennzeichnet, daß**:
- ein Unterprogramm (13a), das in dem genannten Programm (13) enthalten ist, den Systemserver (1) steuert, um den Moment der Übertragung jeder zu übertragenden audiovisuellen Meldung (4) in jedem Visualisierungsmittel (5-7) zu speichern.

16. Einrichtung zur interaktiven Kommunikation nach irgendeinem der Ansprüche 1 bis 15, **dadurch gekennzeichnet, daß**:
- der tragbare Ausweis des Benutzers in dem Speicher des Ausweises eingeschrieben einen Stapel von Identifikationscodes (16a) des Benutzers erhält, die in einer zufälligen Reihenfolge angeordnet sind,
- der Systemserver (1) in dem Speicher des Servers eingeschrieben denselben Stapel von Identifikationscodes von Benutzern enthält, die in derselben zufälligen Reihenfolge angeordnet sind,
- bei jedem spezifischen Befehl (16b) der tragbare Ausweis (14) des Benutzers den Identifikationscode (16a) des Benutzers dem unmittelbar vorhergehenden Platz in dem Stapel von Identifikationscodes des Benutzers zuordnet,
- auf jedem Empfang einer Instruktionsmeldung (17) der Systemserver (1) den empfangenen Identifikationscode (16a) des Benutzers mit dem Identifikationscode des Benutzers des unmittelbar vorhergehenden Platzes in dem richtigen Stapel von Identifikationscodes des Benutzers vergleicht und die Ausführung des spezifischen Befehls (16b) des Benutzers im Falle einer Differenz unterbindet.

17. Einrichtung zur interaktiven Kommunikation nach irgendeinem der Ansprüche 1 bis 15, **dadurch gekennzeichnet, daß** die codierten Instruktionssignale (16) und/oder die Instruktionsmeldungen (17) Gegenstand einer Verschlüsselung mit Schlüsseln sind, die in einer Art der zufälligen Selektion verteilt sind.
